# EUROPÄISCHE PATENTSCHRIFT

(11) **EP 0 846 615 B1**
(45) Veröffentlichungstag und Bekanntmachung des Hinweises auf die Patenterteilung: **14.07.2004**
(21) Anmeldenummer: 97119520.1
(22) Anmeldetag: 07.11.1997
(51) Int. Cl.: B64C 1/14

(54) **Kabinenfensteranordnung für ein Flugzeug**
Cabin window assembly for an aircraft
Ensemble de fenêtre pour cabine d'aéronef

(30) Priorität: 05.12.1996 DE 19650417
(43) Veröffentlichungstag der Anmeldung: 10.06.1998
(73) Patentinhaber: Airbus Deutschland GmbH, 21129 Hamburg (DE)
(72) Erfinder: Scherer, Thomas, Dr.-Ing., 22559 Hamburg (DE); Müller, Rainer, Dipl.-Ing., 21224 Rosengarten (DE); Uhlemann, Sven, Dipl.-Ing., 25436 Uetersen (DE)
(74) Vertreter: Hansmann, Dierk, Dipl.-Ing.

(56) Entgegenhaltungen:
- FR-A- 2 394 728
- US-A- 2 264 176
- US-A- 4 155 205
- US-A- 4 979 342

## Beschreibung

Die Erfindung bezieht sich auf eine Kabinenfensteranordnung für ein Flugzeug gemäß dem Oberbegriff des Anspruchs 1 wie sie durch die US-A-2,264,176 bekannt ist. Mit ihr wird während des Fluges keine Beeinträchtigung der Sichtverhältnisse durch beschlagene Kabinenfensterscheiben eintreten.

Die traditionell verwendeten Kabinenfenster im Passagier-Flugzeugbau besitzen einen Doppelscheiben-Aufbau (Fail Save Aufbau), bei dem zwei Kabinenfensterscheiben einen Scheibenzwischenraum (Hohlraum) einschließen. Nach dieser Kabinenfenster-Lösung befindet sich an der Unterseite der Innenfensterscheibe eine Ventilationsbohrung, um im Hohlraum während des Fluges, insbesondere beim Steig- und Sinkflug eines Passagierflugzeuges, einen Druckausgleich zu realisieren. Dabei findet über die Bohrung, bedingt durch das Druckgefälle zwischen dem Rumpfinneren (Kabinenraum) und dem Hohlraum, ein Luftaustausch statt. Für den Fall, bei dem der Druck in der Kabine im Verhältnis zum Druck im Scheibenzwischenraum größer ist, kann Luft in den Hohlraum eintreten. Da die Außenfensterscheibe des Kabinenfensters in der Regel während des Fluges einer Temperatur von unter Minus dreißig Grad Celsius (-30°C) ausgesetzt ist, kondensieren selbst geringe Anteile an Wasserdampf in der Kabinenluft an der Innenseite der Außenfensterscheibe aus. Die relative Luftfeuchtigkeit ist dabei vom Flugzustand des Flugzeuges abhängig. Galleybetrieb, Passagieranzahl, Flugdauer und Einsatzgebiet spielen eine Rolle für den Anteil an Wasserdampf in der Kabinenluft. Über Schlitze und Verkleidungsstöße gelangt die mit Wasserdampf beladene Kabinenluft hinter die Kabinenfensterverkleidung. Insbesondere, wenn die relative Luftfeuchtigkeit höher ist, beispielsweise bei größerer Auslastung des Passagierflugzeuges, kann es zum Beschlagen der Kabinenfensterscheibe kommen, wobei es infolge der niedrigen Außentemperaturen im Flug zur Eisbildung kommt. Geht das Flugzeug in den Sinkflug über, taut die dünne Eisschicht beim Erreichen des Flugzeuges von wärmeren Luftschichten auf. Danach bildet sich Wasser, das zum Beschlagen der Fensterscheiben und im Extremfall zu seiner Ansammlung an der Unterseite des Scheibenzwischenraumes führt.

Demzufolge liegt der Erfindung die Aufgabe zugrunde, eine gattungsgemäße Kabinenfensteranordnung für ein Flugzeug derart zu verbessern, daß mit ihr während des Fluges - ohne Nutzung eines aktiven Druckregelsystems - ein Beschlagen und Vereisen der Kabinenfensterscheiben verhindert wird.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel näher beschrieben. Es zeigen
- Fig. 1: die herkömmlich (im Passagier-Flugzeugbau) eingesetzte Kabinenfensteranordnung mit einer im unteren Randbereich der Innenfensterscheibe befindlichen Ventilationsbohrung;
- Fig. 2: die Schnittsdarstellung A - A der Kabinenfensteranordnung nach Fig. 1 - ohne Ventilationsbohrung - und mit Modifikation zur Zwangskondensation;
- Fig. 3: das Detail A der Kabinenfensteranordnung nach Fig. 2 zur Darstellung des Kondensationsrohres.

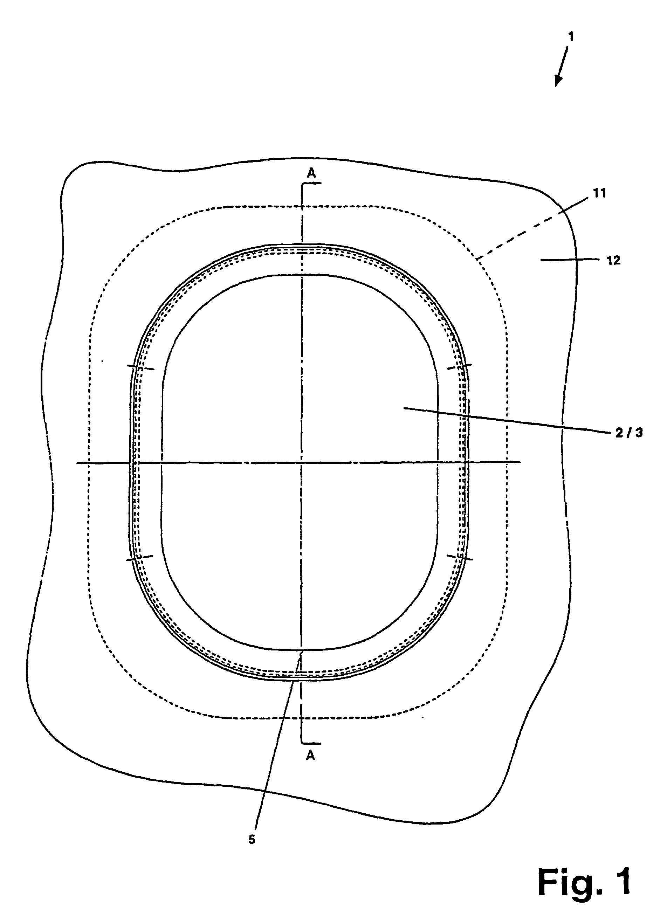

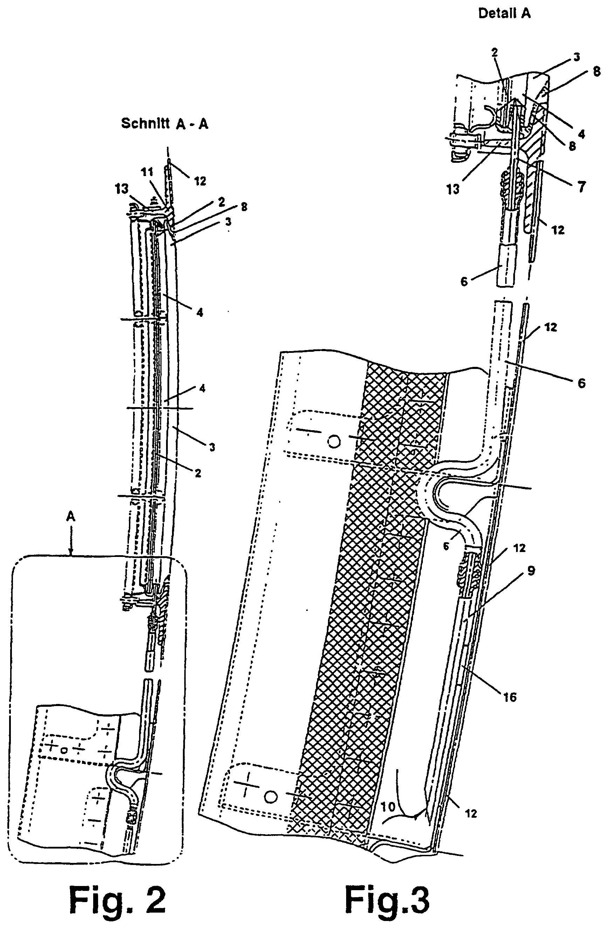

Die Lösung geht davon aus, daß der Doppelscheiben-Aufbau (Fail Save Aufbau) herkömmlich verwendeter Kabinenfenster 1 im Passagier-Flugzeugbau erhalten bleibt. In der Fig. 1 ist der Aufbau des herkömmlich bekannten Kabinenfensters 1 in einer Vorderansicht dargestellt. Die Ansicht zeigt die Anordnung der Innen- und Außenfensterscheibe 2, 3 innerhalb des Kabinenfensterrahmens 11. Der Fensterrahmen selbst wird zum Teil von der Außenhaut 12 des Flugzeuges überdeckt. An der Unterseite des in der Fig. 1 dargestellten herkömmlichen Kabinenfensters 1 befindet sich eine Ventilationsbohrung 5, welche für den Druckausgleich zwischen dem Fensterscheiben-Zwischenraum 4 (hier nicht erkennbar) und dem Rumpfinnenraum (Kabinenraum) sorgt. Über diese Ventilationsbohrung 5 (Ausgleichsbohrung) findet ein Luftaustausch statt, der die vorbeschriebenen Nachteile eintreten läßt.
Ein beschlagfreies Kabinenfenster 1 erhält man durch den Wegfall der Ventilationsbohrung 5 nach Fig. 1 und durch die Realisierung zusätzlicher Maßnahmen, die in der Schnittdarstellung A - A nach Fig. 2 und im Detail A nach Fig. 3 gezeigt sind.

Die weiteren Ausführungen setzen voraus, daß die Kabinenfensterscheiben (Innen- und Außenfensterscheibe 2, 3) innerhalb des Kabinenfensterrahmens 11 mittels der Fensterdichtung 8 fest und dicht sitzen.

Der nach Fig. 1 beschriebene Aufbau (ohne Ventilationsbohrung 5) wird gemäß der Fig. 2 derart ergänzt, indem ein nach innen (zum Rumpfinneren) gerichteter Vorsprung 13, der integrierter Bestandteil des Kabinenfensterrahmens 11 ist, eine in den Fensterscheiben-Zwischenraum 4 (Hohlraum) gerichtete Öffnung aufweist. Durch diese Öffnung wird ein rohrförmiges Adapterelement 7 (adapterartige Vorkehrung) geführt, dessen Rohrquerschnitt die Fensterdichtung 8 durchdringt und bis in den Fensterscheiben-Zwischenraum 4 mündet. Dem außerhalb des Kabinenfensterrahmens 11 befindlichen Schlauchanschluß des Adapterelementes 7 ist ein Ende des Verbindungsschlauches 6 aufgeschoben (befestigt). Das andere Ende des Verbindungsschlauches 6 ist mit einem Zwangskondensationsrohr 9 (Belüftungsrohr) verbunden, das auf einem Halter 16 fixiert wird. Zwischen der Außenhaut 12 des Flugzeuges und dem aus Metall ausgeführten Zwangskondensationsrohr 9 besteht (über den Halter 16) eine direkte, (wärme-)leitende Verbindung.
Das Zwangskondensationsrohr 9 besteht aus einem Material hoher Wärmeleitfähigkeit, welches unterhalb des Kabinenfensterrahmens 11 auf dem (wärmeleitend ausgeführten) Halter 16 befestigt ist.
Der Verbindungsschlauch 6 ist auf dem Schlauchanschluß des Adapterelementes 7 und auch des Zwangskondensationsrohres 9 sitzfest adaptiert.

Die Kabinenfensteranordnung nach der Fig. 3 zeigt den dazugehörigen detaillierten Aufbau.
Damit es nicht zur Kondensation der feuchten Luft bzw. des Wasserdampfes an der Innenseite der Außenfensterscheibe 3 kommt, wird das Zwangskondensationsrohr 9 mit hoher Wärmeleitfähigkeit an der Unterseite des Kabinenfensters 1 des Flugzeuges befestigt. Das Zwangskondensationsrohr 9, das den vorgenannten direkten Kontakt zur kalten Außenhaut 12 des Flugzeuges besitzt, ist über den Verbindungsschlauch 6 mit der Fensterdichtung 8 verbunden, in der das Adapterelement 7 (die Vorkehrung) für die Aufnahme des Verbindungsschlauches 6 straff sitzt. Mit Hilfe des Zwangskondensationsrohr 9 und dem Verbindungsschlauch 6 werden vorteilhafte Wirkungen erreicht, die nachfolgend beschrieben werden.

Durch Undichtigkeiten in der Verkleidung und der Isolierung gelangt (nach Fig. 3) relativ feuchte Luft 10 an die Eintrittsöffnung des Zwangskondensationsrohres 9. Wird nun aufgrund von Druckunterschieden, insbesondere während des Druckausgleiches im Sinkflug, relativ feuchte Luft 10 durch den Verbindungsschlauch 6 und das Zwangskondensationsrohr 9 angesogen, kondensiert der in der Luft enthaltene Wasserdampf im Kondensationsrohr 9 aus. Aufgrund der relativ geringen Druckunterschiede und des langsamen Sinkfluges des Flugzeuges erfolgt der Druckausgleich sehr langsam, so daß das Medium (feuchte Luft und / oder Wasserdampf) ausreichend Zeit besitzt, am kalten Zwangskondensationsrohr 9 auszukondensieren. Dieser Vorgang findet hauptsächlich während des Landevorganges des Flugzeuges statt. Dabei ist das Zwangskondensationsrohr 9 vom Querschnitt so ausgelegt, daß bei der Vereisung des Kondensates genügend Strömungsquerschnitt frei bleibt. Es kann davon ausgegangen werden, daß das Eis spätestens im Sinkflug oder bei der nächsten Wartung des Flugzeuges taut und in Form von Wassertropfen abtropft.

In den meisten Fällen steigt die Temperatur während des Sinkfluges mit abnehmender Reiseflughöhe, bis die Taupunkttemperatur überschritten wird und kein Kondensation mehr einsetzt.

Für den weiteren Druckausgleich im Verlauf der letzten Landephase des Flugzeuges dient der Verbindungsschlauch 6 und das Zwangskondensationsrohr 9 als Trockenluftvorratsbereich, so daß bis zur Landung keine feuchte Luft und / oder kein Wasserdampf angesaugt (transferiert) werden kann.

Daraus ergibt sich, daß ein Druckausgleich stattfindet - ohne dafür ein aktives Druckregelsystem anzuwenden, das technisch aufwendig und kostenintensiv wäre. Es wird gleichzeitig gewährleistet, daß während des Fluges keine feuchte Luft in den Fensterscheiben-Zwischenraum 4 (Hohlraum) gelangt.

## Patentansprüche

1. **Kabinenfensteranordnung für ein Flugzeug**, gebildet aus einem Kabinenfensterrahmen (11), welcher der Wandung des Flugzeugrumpfes eingepaßt ist, und wenigstens zwei Kabinenfensterscheiben (2, 3), die innerhalb der Rahmenkonstruktion des Kabinenfensterrahmens (11) zueinander beabstandet eingesetzt sind und letzteren verglasen, bei der dem Kabinenfensterrahmen (11) innenseitig ein zum Inneren des Flugzeugrumpfes gerichteter Vorsprung (13) angesetzt ist, wobei der Kabinenfensterrahmen (11) außenseitig teilweise von der Außenhaut (12) des Flugzeuges überdeckt ist, bei der die Kabinenfensterscheiben (2, 3) einen als Hohlraum ausgebildeten Fensterscheiben-Zwischenraum (4) einschließen, der durch eine Fensterdichtung (8), die dem Kabinenfensterrahmen (11) aufliegt, begrenzt ist, **dadurch gekennzeichnet, daß** unterhalb des Kabinenfensterrahmens (11) ein rohrförmiges Adapterelement (7) angeordnet ist, das durch den Vorsprung (13) und durch die Fensterdichtung (8) geführt ist und mit seinem oberen Ende in den Fensterscheiben-Zwischenraum (4) mündet, daß am unteren Ende des Adapterelements (7) ein Verbindungsschlauch (6) befestigt ist, der mit einem ihm nachgeordneten Zwangskondensationsrohr (9) verbunden ist, dessen freies Ende einen Teil der dem Rumpfinneren entweichenden verbrauchten Luft (10) bei bestehendem Luftdruckunterschied zwischen dem Rumpfinneren und dem Fensterscheiben-Zwischenraum (4) während des Steig- oder Sinkfluges des Flugzeuges aufnimmt, wobei zwischen der Außenhaut (12) und dem Zwangskondensationsrohr (9) eine direkte Wärme leitfähige Verbindung besteht.

2. **Kabinenfensteranordnung** nach Anspruch 1,
**dadurch gekennzeichnet, daß** das Zwangskondensationsrohr (9) aus einem Material hoher Wärmeleitfähigkeit besteht, welches unterhalb des Kabinenfensterrahmens (11) auf einem wärmeleitenden Halter (16), der direkt auf der Innenseite der metallenen Außenhaut (12) angeordnet ist, befestigt ist.

3. **Kabinenfensteranordnung** nach Anspruch 1,
**dadurch gekennzeichnet, daß** der Verbindungsschlauch (6) auf dem Schlauchanschluß des Adapterelementes (7) und des Zwangskondensationsrohres (9) sitzfest adaptiert ist.

## Claims

1. Cabin window arrangement for an aircraft, formed by a cabin window frame (11), which is fitted in the wall of the fuselage, and by at least two cabin window panes (2, 3), which are installed with mutual clearance inside the frame structure of the cabin window frame (11) and glaze the latter, wherein there is attached to the inside of the cabin window frame (11) a projection (13) directed towards the interior of the fuselage, wherein the cabin window frame (11) at the outside is partially overlapped by the outer skin (12) of the aircraft, wherein the cabin window panes (2, 3) enclose a window pane gap (4) in the form of a cavity, which is delimited by a window seal (8), which lies against the cabin window frame (11), **characterized in that** disposed below the cabin window frame (11) is a tubular adapter element (7), which extends through the projection (13) and through the window seal (8) and opens at its upper end into the window pane gap (4), that there is fastened to the lower end of the adapter element (7) a connection hose (6), which is connected to a downstream forced condensation tube (9), the free end of which receives some of the spent air (10) escaping from the fuselage interior in the event of an air pressure difference between the fuselage interior and the window pane gap (4) during the ascent or descent of the aircraft, wherein between the outer skin (12) and the forced condensation tube (9) there is a direct heat-conductive connection.

2. Cabin window arrangement according to claim 1, **characterized in that** the forced condensation tube (9) is made of a material of high thermal conductivity, which is fastened below the cabin window frame (11) on a heat-conducting holder (16), which is disposed directly on the inside of the metal outer skin (12).

3. Cabin window arrangement according to claim 1, **characterized in that** the connection hose (6) is adapted to fit tightly on the hose connection of the adapter element (7) and of the forced condensation tube (9).

## Revendications

1. Ensemble de fenêtres pour cabine d'aéronef constitué d'un châssis de fenêtre de cabine (11) adapté à la paroi du fuselage de l'aéronef, et d'au moins deux vitres de fenêtres de cabine (2, 3) qui ont été insérées dans la structure du châssis de la fenêtre de cabine (11), avec un certain écartement, et qui vitrifient ledit châssis, une saillie (13) orientée vers l'intérieur du fuselage d'avion ayant été appliquée contre le châssis de la fenêtre de cabine (11), sur le côté intérieur, le châssis de la fenêtre de cabine (11) ayant été recouvert partiellement, sur le côté extérieur, par la membrane externe (12) de l'aéronef, et les vitres de la cabine (2, 3) délimitant un espace intermédiaire entre les vitres conçu sous la forme d'un espace creux et délimité par un joint de fenêtre (8) reposant sur le châssis de fenêtre de la cabine (11), **caractérisé en ce que** un élément d'adaptation (7) tubulaire guidé à travers la saillie (13) et le joint de fenêtre (8) et débouchant avec son extrémité supérieure dans l'espace intermédiaire entre les vitres (4) a été disposé sous le châssis de fenêtre de la cabine (11), et **en ce que** un tuyau de raccordement flexible (6) raccordé à un tuyau de condensation forcée (9) disposé en aval et dont l'extrémité libre reçoit une partie de l'air consommé (10) s'échappant de l'intérieur du fuselage pendant la montée ou la descente de l'aéronef, en cas de différentiel de pression entre l'intérieur du fuselage et l'espace intermédiaire entre les vitres (4) a été fixé à l'extrémité inférieure de l'élément d'adaptation (7), une liaison thermo-conductrice directe existant entre la paroi externe (12) et le tuyau de condensation forcée (9).

2. Ensemble de fenêtres pour cabine selon la revendication 1,
**caractérisé en ce que** le tuyau de condensation forcée (9) est constitué d'un matériau bon conducteur de chaleur fixé sous le châssis de fenêtre de la cabine (11) sur un support thermo-conducteur (16) apposé directement sur le côté intérieur de la paroi externe métallique (12).

3. Ensemble de fenêtres pour cabine selon la revendication 1,
**caractérisé en ce que** le tuyau de raccordement flexible (6) a été adapté de manière à s'appuyer fermement sur le raccordement de tuyau de l'élément adaptateur (7) et du tuyau de condensation forcée (9).
